# EUROPEAN PATENT SPECIFICATION

(11) **EP 3 523 256 B1**
(45) Date of publication and mention of the grant of the patent: **28.05.2025**
(21) Application number: 17791955.2
(22) Date of filing: 09.10.2017
(51) Int. Cl.: C02F 11/126, C02F 11/127, B01D 21/26, B01D 33/41, B01D 33/46, B01D 35/027, B01D 33/067, B01D 33/073, B01D 33/80, B01D 36/04

(54) **EQUIPMENT FOR COLLECTING AND TREATING WASTE WITH A FILTERING UNIT AND PROCESS THEREFOR**
ABFALLSAMMEL- UND -BEHANDLUNGSAUSRÜSTUNG MIT FILTEREINHEIT UND VERFAHREN DAFÜR
ÉQUIPEMENT ET PROCÉDÉ POUR LA COLLECTE ET LE TRAITEMENT DE DÉCHETS, AVEC UNE UNITÉ DE FILTRATION

(30) Priority: 07.10.2016 EP 16192868
(43) Date of publication of application: 14.08.2019
(73) Proprietor: Jurop S.p.A., 33082 Azzano Decimo (IT)
(72) Inventor: SANTAROSSA, Danilo, 33082 Azzano Decimo (IT)
(74) Representative: De Bortoli, Tiziano
(86) International application number: PCT/EP2017/075691
(87) International publication number: WO 2018/065630

(56) References cited:
- WO-A1-2008/023884
- DE-U1- 202004 011 107
- GB-A- 2 107 598
- KR-B1- 100 618 919
- US-A- 5 435 854
- US-A1- 2016 121 248
- US-B1- 7 731 840

## Description

### FIELD OF THE INVENTION

The present invention belongs to the field of manufacturing fixed or movable equipment which may be used for collecting and treating waste in semi-solid, sludgy, liquid or gaseous state. In particular, the present invention relates to an equipment, preferably in the form of a tank truck, for collecting and treating such a waste, comprising a filtering unit which may be inserted into a compartment of a tank of the equipment, and to a method for operating the equipment.

### BACKGROUND ART

The use of tank truck for loading, transporting and unloading products, typically waste in solid, semi-solid, liquid sludgy or gaseous state, is well known. Usually a tank truck comprises a vehicle on the chassis of which a tank and a series of devices (sludge suction pumps or compressors) for aspirating the sludge waste are mounted. Such aspiration occurs by generating a vacuum in the tank or in a compartment thereof, so that the sludge is aspirated directly into the tank. Normally, a tank has two main objects: to provide a reserve useful for washing pit or pipes and to accommodate/collect the sludge and the aspirated waste. For this reason, a tank usually comprises two compartments, one for collecting sludge and the other as reservoir for water for cleaning operations. In order to increase operation efficiency, and, consequently, the operative autonomy of the vehicle, filtering and recirculating systems have been developed over the years which allow the reuse of the part of water separated and filtered from the aspirated sludge.

In nearly all cases, such systems comprise a primary filter, typically located inside the compartment of the tank which collects the sludge. A secondary filter is instead installed outside the tank. The water is subjected to at least two filtering stages. In particular, the water processed by the primary filter is transferred to the secondary filter through a recirculation pump, located outside the tank. Once processed by the secondary filter, the water reaches a second compartment which works as a reservoir. From the second compartment, the water passes through a filter located upstream of a high pressure pump which allows to reuse the water from the tank for cleaning operations.

In order to improve filtering quality, in some known solutions, a third filtering stage operatively located downstream of the second stage is provided. In these solutions, the tank also comprises a third compartment and a further circulation line provided with a further pump, through which the water exiting from the second compartment reaches the third filtering stage. The water exiting from the third filtering stage reaches the third compartment and then the high pressure pump.

The filtering systems described above achieve very high filtering efficiency, which in some cases can reach even 5 microns by using appropriate filters. However, this appreciable result is accompanied by a high construction cost, on which system assembly considerably weighs. Indeed, besides the primary filter, the other water circulation components (pipes, pumps) and the other filters are arranged around the tank. In other words, almost all components are fixed to the outside of the tank. In addition to the considerable design and installation difficulties established by this constructional choice, also the criticality generated by such filtering systems in terms of overall dimensions is obvious.

It has also been found that, in some cases, the resulting filtering levels, and thus the incurred manufacturing costs, are not always justified by the actual use of the tank truck. In other words, a filtering efficiency in the order of 5 microns is not required for most of uses. The systems described above are also critical because they considerably limit the versatility of use of the tank. Indeed, because of the above described traditional filtering system configuration, a tank used for collecting sludge cannot be applied for alternative uses, such as for example for collecting special waste (e.g. sodium hydroxide).

Document US 2016/121248 describes a dual stage filter assembly for use in a fluid cleaning and sludge removal operation, including a first stage separator incorporated into a first vessel and receiving a dirty fluid flow, a first stage clean fluid outlet extending from the first stage separator. A second stage filter is incorporated into a second vessel in fluidic communication with a dirty fluid outlet of the first stage separator for subsequent filtering and outflow through a second stage clean outlet. A flow restrictor is incorporated into said second stage clean outlet for controlling a flow rate through said filter in order to prevent clogging of the same by aggregating debris.

This assembly is integrated into a machine stage located coolant supplying or other localized machining operation, which means that it does not need to be movable and thus to be compact, nor to be versatile. As a matter of facts, it does not solve the above problems, since the two filters and the relevant hydraulic elements are positioned outside the dirty reservoir.

GB 2107598 describes a portable cleaning apparatus for removing particulate solids from bodies of liquid such as the water in the basin of a cooling tower, comprising a trailer mounted on wheels, for enabling said trailer to be towed from place to place, and carrying a power driven pump, a filter, a bank of hydrocyclones and a settling tank, so connected that in use the pump draws liquid from the liquid body and delivers it to the filter and thence through the hydrocyclones back to the liquid body. This apparatus does not solve the above-mentioned problems since the two filtering apparatuses are not compact, nor may be positioned inside the cooling tower. As a matter of facts, a hose is used to drive dirty fluid outside the tower basin. This kind of solution is not applicable in the present contest.

DE 202004011107U1 describes an assembly for the separation of water from drilling mud has two drum filters on a horizontal powered shaft, within each other, with inner water jet lances and outer scrapers for cleaning.

US 5435854 describes a cleaning module for cleaning sewer pipes including sewer liner, and other types of conduits.

WO2008/023884 discloses a sewage treatment apparatus of a garbage vehicle that separates sludge from collected sewage and filters the sewage to supply reusable water. KR100618919 discloses a movable apparatus that process the sludge collected from a sump.

Neither these latter documents disclose a solution for the above mentioned problems.

In view of the considerations above, it is the main task of the present invention to provide a solution which may be an alternative to traditional filtering systems and allows to overcome the above-described drawbacks. In the scope of this task, it is an object of the present invention to provide an equipment for collecting and treating sludge waste comprising a part of water which is, at the same time, economic, effectively, compact and of reduced dimensions.

In particular, it is an object of the present invention to provide an equipment for collecting and treating sludge waste comprising a part of water having a filtering unit which has relatively low construction costs and which achieves effective filtering at the same time. It is another object of the present invention to provide an equipment for collecting and treating sludge waste comprising a part of water having a filtering unit which confers versatility and flexibility of use to a tank of the equipment. It is another object of the present invention to provide an equipment for collecting and treating sludge waste comprising a part of water having a filtering unit which can be inserted into a tank of the equipment without influencing, in this way, the overall dimensions of the tank and/or of the chassis whereon the tank is mounted and/or of the tank truck. Another object of the present invention is to provide an equipment for collecting and treating sludge waste comprising a part of water having a filtering unit which is reliable and easy to be manufactured at competitive costs.

A further object of the present invention is to provide a method for operating an equipment for collecting and treating sludge waste comprising a part of water which is simple, effective and achieves a reduction of costs and, meanwhile, a reduction of encumbrance of the equipment where it is performed.

### SUMMARY

The present invention relates to an equipment for treating sludge waste, i.e. waste comprising a part of water, which comprises at least one tank defining at least one compartment for the collection of said waste. The tank comprises at least one manhole which defines a passageway for the insertion of filtering means in said compartment. The filtering means comprises a filtering unit suitable to be inserted within said collection compartment (comprising sludge waste) and comprising a first filtering module and a second filtering module for separating and/or filtering the water contained in the sludge. The filtering unit further comprises a circulation line to transfer the water filtered by the first module to the second module, and a collection line to collect and convey the part of water filtered by said second module outside the collection compartment. The filtering unit further comprises a frame which supports the filtering modules and which is either partially or completely insertable into the tank compartment. The filtering unit further comprises connection means configured to provide a preferably removable connection between the frame and the tank so that the filtering modules are completely arranged within the compartment upon such a connection. Said connection means comprise a base comprising a first side, from which said supporting frame develops

The filtering unit comprises a containment which develops from a second side of said base opposite to said first side. Moreover, the filtering unit comprises control means of the filtering unit itself which are housed in said containment.

The above combination of features achieves the above-mentioned goals. In particular, the presence of two filtering modules together with such frame and such connection means, render the filtering unit effective, economic and easy to use. The peculiar geometries of the components of the filtering unit, in particular of the frame, and their relative positioning achieve a filtering unit which is also compact and less cumbersome.

By means of the equipment according to the invention, the water contained in the aspirated sludge is advantageously separated and filtered inside the collection compartment. More precisely, the filtering unit is configured to form no fewer than two water filtering stages within the collection compartment. With respect to the traditional solutions, the invention allows to reduce the equipment assembly times and costs. Furthermore, the possibility of removing and replacing the filtering unit from the tank achieves not only easiness of maintenance operation but also high versatility of the tank. As a matter of facts, the known filtering units which are sealed inside the tank (or, in any case, not removable), limit the use of such tank to a specific use, since most of the filtering units are suitable for specific waste to treat. While the possibility to change the filtering unit allows to use the tank for different waste product, comprising chemically aggressive products, which would for example compromise filtering units used for domestic sewage. This results in a more versatile and flexible in use equipment (e.g. the tank truck).

As above, said connection means comprise a base comprising a first side, from which said supporting frame develops. In other words, the base (which separates the compartment inner region from the compartment outer region) and the frame (which supports the filtering units) are rigidly connected. This means that it is possible to introduce the filtering units within the tank while closing the tank, with a single movement.

Advantageously said connection means comprises also a flange connectable to a corresponding flange of the manhole. As above, the filtering unit comprises a containment which develops from a second side of said base opposite to said first side. Moreover, the filtering unit comprises control means of the filtering unit itself which are housed in said containment. This feature allows to achieve a more compact equipment. As a matter of facts, usually the control means are located in an external housing made for this mere purpose. Furthermore, this feature makes the control means accessible for purpose of intervention/adjustment. According to a preferred embodiment of the present invention, the collection line passes through the base and ends with an end portion located in an area which is outside the collection compartment (once said base have been connected to said manhole) so that the water filtered by the second module exits from said compartment. This feature achieves a filtering unit which is easy to maintain, since the end portion of the collection line is easily accessible from outside. Furthermore, this feature allows to use or to adapt already existing tank for this use, since it is not necessary to have additional opening in the tank for the exit of the filtered water. When a tank is purposely produced for this use, this feature allows to achieve a simple and cheap tank production process, since no openings must be obtained in the wall of the tank.

Preferably, the frame comprises means for adjusting the extension of the frame itself along a reference direction. This allow obtaining a versatile filtering unit which is usable with different sizes of tanks.

Preferably, the longer dimension of the widest cross section of the portion of filtering unit developing from base first side along developing direction is shorter than the longer dimension of the cross section of the manhole. This allows to obtain a filtering unit which is easy to be inserted in and removed from the collection compartment through the manhole, without additional elements.

The equipment having the features described above allows performing a process for collecting and treating sludge waste comprising a part of water comprising the steps of:
- collecting sludge waste comprising a part of water in a compartment of a tank;
- filtering said sludge waste in a first filtering module inside said compartment;
- conveying at least one portion of said one stage filtered water in a second filtering module inside said compartment;
- filtering the conveyed water in said second filtering unit inside said compartment;
- conveying the two stages filtered water outside compartment.

Since the two filtering operations takes place inside the waste compartment, a step of driving the sludge waste outside compartment before the first filtering step or a step of driving the one stage filtered water outside compartment before the second filtering step it is not actuated.

This process, avoiding to perform a stage of the traditional methods, achieves a faster method and, above all, allows to obtain a more compact and economic equipment to perform the process.

According to a further aspect, the invention relates to a method of operation of an equipment for collecting and treating sludge waste comprising a part of water having the features described above, said method comprising the steps of:
a. inserting said filtering unit in said compartment through said manhole;
b. activating means for collecting the sludge waste inside said compartment;
c. activating said first filtering module and said second filtering module of said filtering unit;
d. activating means for conveying two stages filtered water outside said compartment.

This method allows avoiding the long step of assembling the external apparatuses (pumps, filtering units...) to the equipment, thus resulting in a simpler, easier and economic method. As a matter of facts, the assembling step has been replaced with the easy step of inserting a complete and compact filtering unit. Step a may be actuated before or after step b.

### LIST OF DRAWINGS

Further features and advantages of the present invention will become more apparent from the following detailed description provided by way of non-limiting example and shown in the accompanying drawings, in which:
- Figure 1 is a perspective view of a tank comprising a filtering unit of an equipment according to the present invention;
- Figure 2 is a view related to the step of inserting the filtering unit into the tank of Figure 1;
- Figure 3 is a cutaway view of the tank in Figure 1;
- Figures from 4 to 7 are views from different points of observation of a filtering unit of an equipment according to the present invention;
- Figure 8 is an exploded view of the filtering unit of Figures from 4 to 7;
- Figure 9 is a diagram related to control means of a filtering unit of an equipment according to the present invention.

The same reference numbers and letters in the figures refer to the same elements or components.

### DETAILED DESCRIPTION

With reference to the mentioned figures, the present invention relates to an equipment, generally indicated by reference numeral 3, for collecting and treating sludge waste, wherein the term "sludge" indicates waste comprising at least one part of water. Equipment 3 comprises at least one tank 2 defining a compartment 200 for collecting said waste and at least one manhole 114 defining a passageway for inserting filtering means into compartment 200. The filtering means comprise at least one filtering unit 1 configured to separate the water from the sludge waste and to filter the water itself.

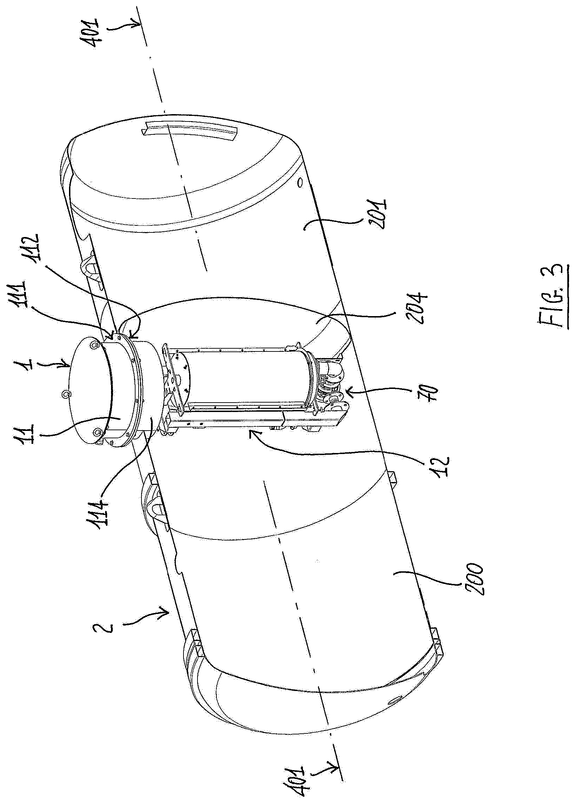

With reference to Figures from 1 to 3, discussed below, unit 1 is at least partially insertable into a tank 2 which can be fitted on a vehicle (not shown), so as to configure a tank truck as a whole. Alternatively, tank 2 may be arranged on a fixed supporting structure. The sludge may be collected in tank 2 by means of suction devices of known type, which are not described because they are not pertinent to the present invention. Tank 2 is provided with an opening bottom 2D so as to allow the access of operators for cleaning operations during maintenance of the equipment (tank truck). As shown in the view in Figure 3, tank 2 preferably comprises a first sludge waste collection compartment 200 and a second compartment 201 for collecting the filtered water. The two compartments 200, 201 are divided by a partition wall 204, which is either fixed or adjustable in position along the development axis 401 of tank 2.

Figures from 4 to 9 are views from different points of observation of a filtering unit 1. Such a unit 1 comprises at least a first filtering module 21 and a second filtering module 22, which form respectively a first filtering stage and a second filtering stage of the water contained in the sludge waste. Filtering unit 1 is further provided with a circulation line 70 configured to transfer the water filtered by the first filtering module 21 to the second filtering module 22. The portion of water filtered by the second module 22 is advantageously conveyed into a collection line 80, while the portion of water not filtered by the second module 22 is conveyed on a discharge line 81.

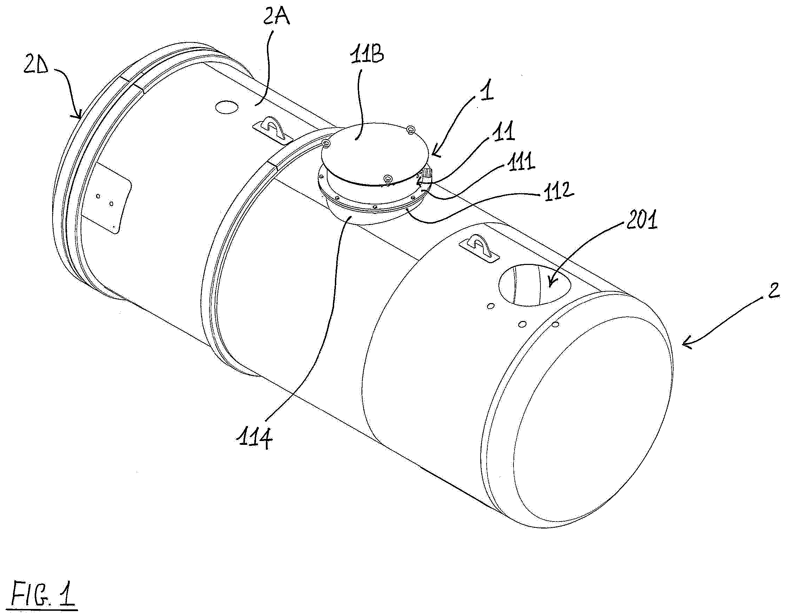

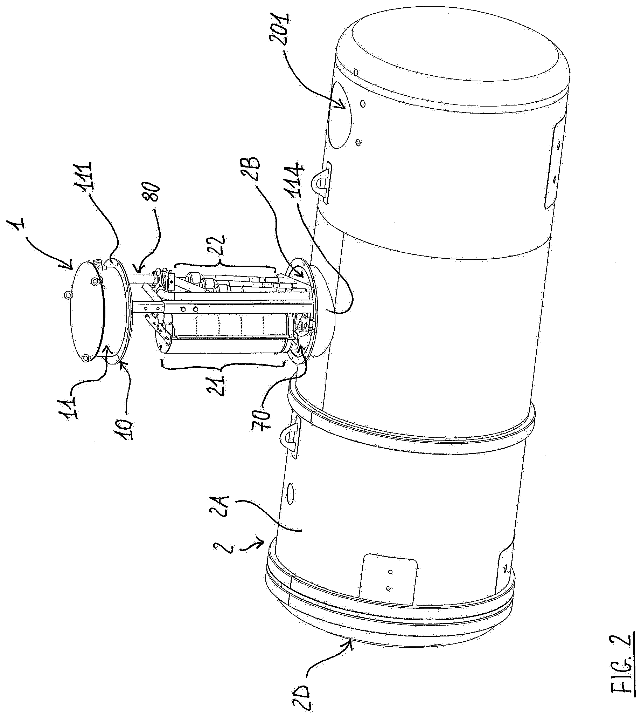

The filtering unit 1 comprises a supporting frame 12 which supports the first module 21 and the second module 22. In particular, frame 12 is configured so as to be insertable through a manhole 114 of tank 2 for which unit 1 is intended so that, once in use, the filtering modules 21, 22 are completely arranged inside the tank 2. For the purposes of the present invention, the term "manhole 114" indicates a hollow element which is connected, and preferably welded, to the tank body 2A of tank 2 around an opening 2B defined through the tank body 2 itself (see figures 1 and 2). Preferably, manhole 114 has a circular cross section, the extension of which corresponds to that of said opening 2B. The hollow part of manhole 114 and the opening 2B make the first compartment 200 communicating with the outside, thus defining a passageway for inserting the frame 12 of unit 1.

In order to allow the connection to tank 2, unit 1 comprises connection means configured to form a connection between frame 12 and tank 2 so that the filtering modules 21, 22 are completely arranged inside the first compartment 200 upon such a connection. In other words, the connection means, which will be better described hereinafter, are positioned and configured so as to allow the filtering unit 1 to be at least partially inserted and the filtering modules 21, 22 to be completely inserted in compartment 200 (which houses the waste), when in use, i.e. once the filtering unit 1 has been connected to tank 2.

In the present contest the wordings "completely arranged" and "completely inserted" in compartment 200, referred to the filtering modules 21, 22, mean that each single portion of the filtering modules 21, 22 are physically contained, enclosed in compartment 200, as shown in Figure 1. This figure illustrates a view of the filtering unit 1 already connected to tank 2 by means of connection means, and thus already inserted and enclosed in compartment 200.

According to a preferred embodiment, such connection means comprise a base 10 from a first side 10A of which the frame 12 develops. During use, base 10 separate the inner region of compartment 200 from the outer region. Preferably, base 10 has a circular shape.

Preferably, base 10 is provided with a flange 111 which is connectable, for example through screw/bolt joints, to a corresponding flange 112 fixed to the tank 2, preferably at the end of the manhole 114. Preferably, the two flanges 111,112 are circular flats, in particular, they are annular flats. However, the two flanges 111,112, like the manhole 114, could also be of a different shape.

Figure 2 refers to the step of inserting unit 1 into tank 2 through the manhole 114. Preferably, the manhole 114 emerges from the upper portion of body 2A so that filtering unit 1 can be inserted/dropped, e.g. by means of a crane or a lift truck, into the tank 2 itself according to a substantially vertically insertion direction. The possibility of arranging a manhole 114 in another position, and thus defining another insertion direction, is also within the scope of the present invention. Again with reference to Figure 1, the insertion of filtering unit 1 is completed when the two flanges 111,112 come into contact. In this condition, as already mentioned, the frame 12 is partially inside compartment 200 and the two modules 21, 22 are completely located inside the same compartment 200, i.e. inside the tank 2. The connection between the two flanges 111,112 further seals the collected material in the tank 2, thus preventing the sludge from exiting through the manhole 114.

From figure 2 it is apparent that inserting filtering unit 1 in the manhole 114 and closing compartment 200 are carried out in the same time. This single step makes the assembling operation even faster.

Filtering unit 1 preferably comprises a containment 11 which develops from a second side 10B of the base 10 opposite to the first side 10A from which frame 12 develops. In other words, the position of containment 11 is opposite to that of the supporting frame 12 with respect to base 10. As apparent from the mentioned figures 1-3, after connecting base 10 to tank 2, containment 11 remains advantageously substantially outside tank 2, i.e. outside the first compartment 200.

Control means of filtering unit 1, i.e. means configured to control the operation of the modules 21, 22 and/or of the operative means arranged along the circulation line 70 and/or along the collection line 80, are preferably located in the containment 11. The substantially "*outer*" configuration of containment 11 makes the control means advantageously accessible for purpose of intervention/adjustment.

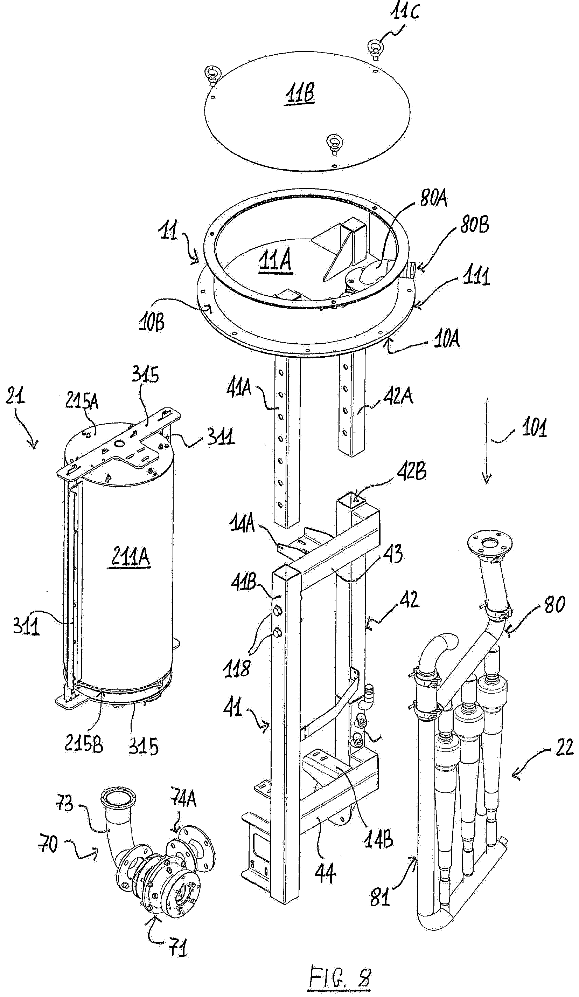

In this regard, according to an embodiment shown in Figure 8, containment 11 preferably comprises a hollow body 11A which develops from the mentioned second side 10B of the base 10 up to a removable lid 11B which closes the hollow body 11A in a position opposite to base 10. Hooking means 11C adapted to promote lifting of the filtering unit 1 are preferably provided to remove lid 11B.

According to another aspect of the present invention, the collection line 80 of the water filtered by the second module 22 advantageously passes through the base 10.

The portion of the collection line 80 collocated downstream base 10, is hereby called collection line stretch portion 80A. Once filtering unit 1 is connected to tank 2, the water filtered by the first module 21 and by the second module 22 may be advantageously conveyed outside the first compartment 200, e.g. into the second compartment 201 of the tank 2 by means of an end portion 80B of the collection line 80. The filtered water may be used, for example, for washing operations by exploiting the pressure generated by an appropriate pump according to a principle known in itself.

In the embodiment shown in the figures, it is worth noting that the stretch portion 80A of the collection line 80 passes through containment 11 and the end portion 80B exits from the containment 11 to be connected to a further stretch (not shown), which is preferably arranged outside tank 2. This feature is particular relevant because it allows an easy maintenance operation since it is not necessary to go through tank 2 to clean and/or repair collection line 80 and also because it avoids practicing holes in the tank walls, as explained before.

With reference to the figures from 4 to 8, the base 10 preferably develops along a plane 100 and frame 12 prevalently develops along a development direction 101 which is substantially orthogonal to plane 100. According to another advantageous aspect of the present invention, frame 12 is preferably extensible/retractable in a reference direction. In other words, frame 12 is provided with adjustment means which allow to adjust its extension along said reference direction which is preferably parallel to the development direction 101 defined above. This technical solution makes unit 1 particularly versatile because the extension of frame 12 may be adjusted as a function of the diametrical extension of the tank 2 for which unit 1 is intended. That is to say, adjustable frame 12 makes the filtering unit 1 usable with different size of tank 2, that is a great advantage.

According to a preferred embodiment shown in the figures, frame 12 comprises two longitudinal elements 41, 42, connected to the first side 10A of base 10, which develop along the development direction 101 as indicated above. Frame 12 further comprises two transversal elements 43, 44 which develop prevalently along a transversal direction 102 substantially orthogonal to the development direction 101. In particular, a first transversal element 43 is connected to the two longitudinal elements 41, 42 in a position close to base 10, while a second transversal element 44 is connected to the longitudinal elements 41, 42 in a position close to a terminal part of the longitudinal elements 41, 42 which is opposite to the base 10 itself.

With particular reference to the exploded view in Figure 8, it may be seen that, in order to allow the adjustment of the extension of frame 12 along the development direction 101, the longitudinal elements 41, 42 comprise respectively first terminal part 41A, 42A fixed to the first side 10A of base 10 and telescopically inserted into respectively second parts 41B, 42B of the same elements 41, 42. The insertion position of the first part 41A, 42A in the second part 41B, 42B, or vice versa, is established by using screw means 118 or other functionally equivalent means. Such an insertion position thus establishes the extension of the frame 12 along the development direction 101.

According to a preferred embodiment, the first filtering module 21 comprises a filtering cartridge 211 and rotation means to rotate cartridge 211 about a rotation axis 150. Frame 12 supports the cartridge 211 and the rotation means. In particular, the first module 21 is supported so that the rotation axis 150 of cartridge 211 is substantially parallel to the development direction 101 of the frame 12 itself. In other words, the cartridge 211 develops longitudinally along the same development direction 101 of frame 12, achieving, in this way a further reduction of encumbrance.

The filtering cartridge 211 comprises a main body 211A with a substantially cylindrical development defining an inner cavity (not shown in the figures) and some radial passageways. These latter allow the water to pass from the outside towards said inner cavity, while preventing some material from passing. Main body 211A is closed at its ends by two containment plates 215A, 215B connected in a rotatable way to corresponding brackets 14A, 14B of frame 12. In the embodiment shown in the figures, for example, frame 12 comprises a first plate 215A rotatably connected to a first bracket 14A protruding from the first transversal element 43, while a second plate 215B is connected in a rotatable way to a second bracket 14B protruding from the second transversal element 44. As a whole, such rotational connections configure the rotation axis 150 of the filtering cartridge 211.

Preferably, the first filtering module 21 also comprises scraper means operatively associated with the filtering cartridge 211 to scrape the outer surface of the main body 211A during the rotation of the cartridge 211 itself. As shown in the figures, such scraper means comprise two scraping blades 311 which intervene on the main body 211A at diametrically opposite positions and which are supported at their ends by a corresponding plate 315 adjacent to a corresponding containment plate 215A, 215B of cartridge 211. In particular, the scraping blades 311 are connected to plates 315 so as to slide according to a substantially circumferential direction with respect to the rotation axis 150 of cartridge 211. Appropriate elastic means act on the scraping blades 311, e.g. helical springs, so as to keep the blades in contact with the outer surface of main body 211A. Thereby, during the rotation of cartridge 211, the solid part of the sludge is scraped out by the outer surface of main body 211A in two diametrically opposite regions.

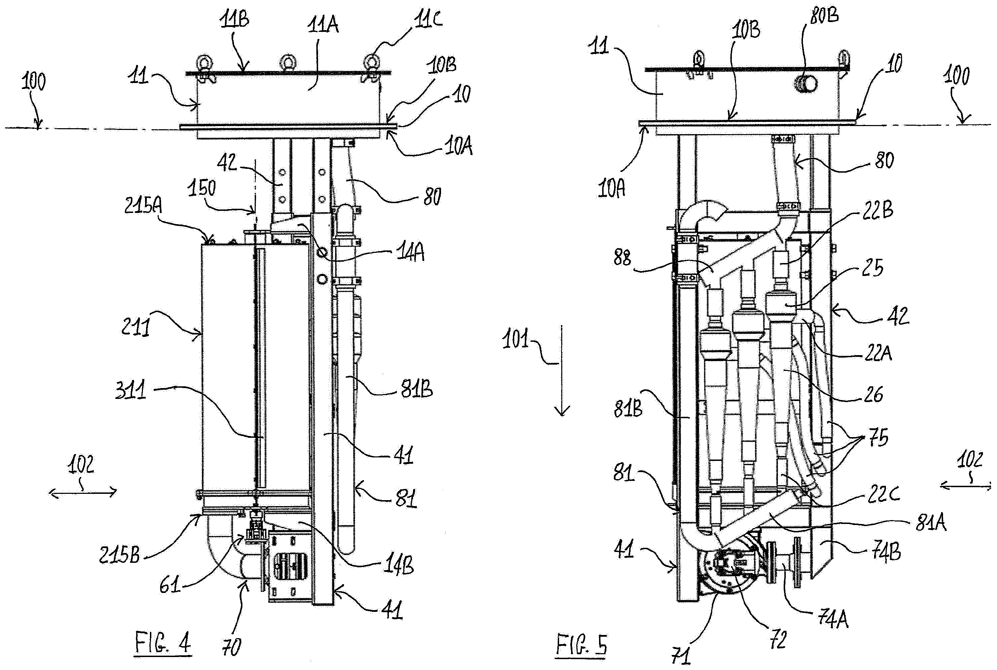

Preferably, the rotation means comprise a hydraulic motor 61 connected to one of the containment plates 215A, 215B so as to rotate the plates 215A, 215B themselves, and the cartridge 211 connected thereto as a consequence. In the example shown in the figures, the hydraulic motor 61 is installed in a further distal position with respect to base 10, under the containment plate 215B (see Figure 4). Such a plate 215B further defines an opening through which the water filtered by cartridge 211 reaches the circulation line 70. Substantially, such an opening defines the outlet of the first filtering module 21 connected to the circulation line 70.

According to another aspect of the invention, the circulation line 70 comprises a circulation pump 71, actuated by a hydraulic motor 72, the suction of which is connected to the outlet of the first filtering module 21 through a first line stretch 73, preferably in the form of piping. The circulation line 70 further comprises a second stretch 74A, 74B which connects the delivery of pump 71 to the second filtering module 22. In the solution shown in the figures, such a second stretch 74A, 74B is defined by a piping part (which acts as a second stretch 74A) and a terminal part (which acts as a second stretch 74B) of a longitudinal element 41 of frame 12. In other words, a hollow portion of a frame element 12 is advantageously used as circulation stretch of the water intended to the second filtering module 22. This solution allows to simplify the configuration of the circulation line 70 and to further reduce dimensions of the filtering unit 1.

According to another aspect, the second module 22 comprises at least one cyclone separator, which includes at least one inlet section 22A communicating with the circulation line 70, a first outlet section 22B communicating with the collection line 80 and a second outlet line 22C communicating with the discharge line 81. The cyclone separator has a conformation known per se defined by a substantially cylindrical chamber 25 in which the water enters according to a tangential direction to take a spiral (swirling) motion in the chamber 25 itself. The chamber 25 defines the first outlet section 22B connected to the circulation line 70. The cyclone separator further comprises a conical portion 26 underneath the chamber 25 and communicating therewith.

Due to the spiral motion imparted to the water, the solid particles of the sludge waste adhere to the inner surface of the cylindrical chamber 25 to then slide by gravity along the walls of the conical portion 26 to reach the second outlet section 22C defined by the conical portion 26 itself. Whereas the water filtered from the solid particles exits from the first outlet section 22A and is conveyed into the collection line 80. According to a preferred embodiment, shown in the figures, the second filtering module 22 comprises a plurality of cyclone separators each with the features described above.

With reference to Figure 5, is it worth noting that the inlet section 22A of each cyclone separator is connected to the second stretch 74A of the circulation line 70 through a connection stretch 75, preferably of a flexible type. Furthermore, it is worth noting that the first outlet section 22B of each cyclone is communicating with a straight stretch 88 of the collection line 80 inclined with respect to the development direction 101. Similarly, the second outlet section 22C of each cyclone also communicates with a straight stretch 81A of the discharge line 81, which is substantially parallel to the mentioned straight stretch 88 of the collection line 80. This arrangement also contributes to making the structure of filtering unit 1 more compact. In this regard, according to another aspect shown in figure 4, the cyclone separators of the second filtering module 22 are preferably arranged on one side of the supporting frame 12 opposite to that which supports the first module 21.

The discharge line 81 of the water not filtered by the second module 22 has a further stretch 81B, which is substantially parallel to the development direction 101 of the frame 12. Such a further stretch 81B is positioned downstream of the inclined straight stretch 81A with respect to the flow of water not filtered by the second filtering module 22. With reference to Figure 5, once unit 1 has been inserted into the first compartment 200 of the tank 2, the water not filtered by the second module 22 is discharged, through the discharge line 81, into the tank 2 itself. On the contrary, the water filtered by the second module 22 is conveyed outside the first compartment 200 of the tank 2 due to the particular configuration conferred by the collection line 80.

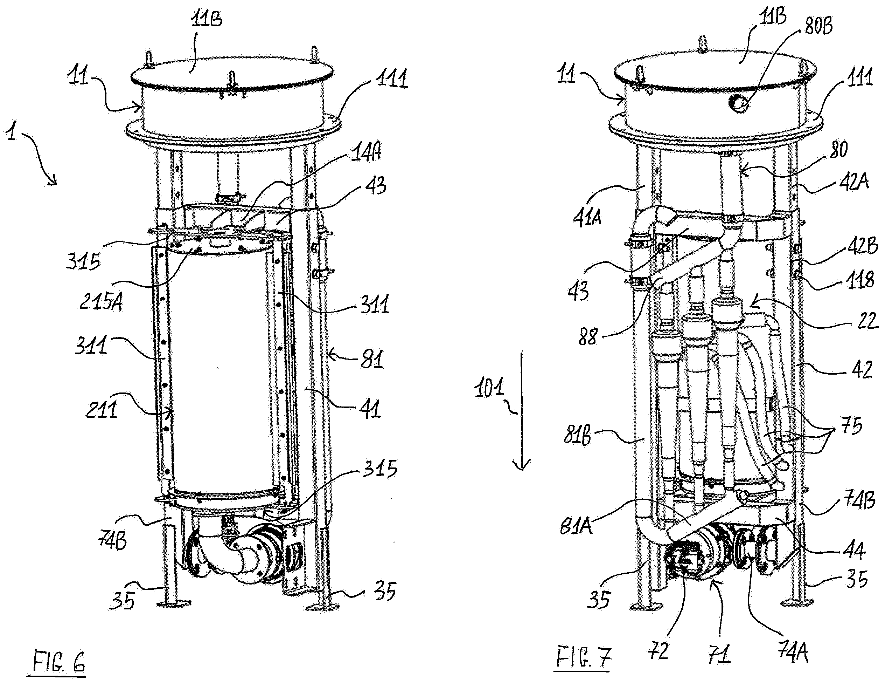

According to a further aspect, filtering unit 1 comprises anchoring means for stably anchoring frame 12 into the compartment 200 once filtering unit 1 is inserted into the tank 2 itself. More specifically, such anchoring means allow to fix frame 12 in a stable manner to one or more brackets 35 (or supports) fixed inside tank 2, e.g. by welding. In a possible embodiment shown in Figures 6 and 7, the brackets 35 are fixed to the inner surface of tank 2 in a position substantially opposite to the opening of the manhole 114 through which frame 12 is inserted. Thereby, at least two anchoring points are generated in a position opposite to the base 10, fixed to tank 2. The connection means may comprise screw elements or functionally equivalent elements through which the longitudinal elements 41, 42 are fixed to the brackets 35.

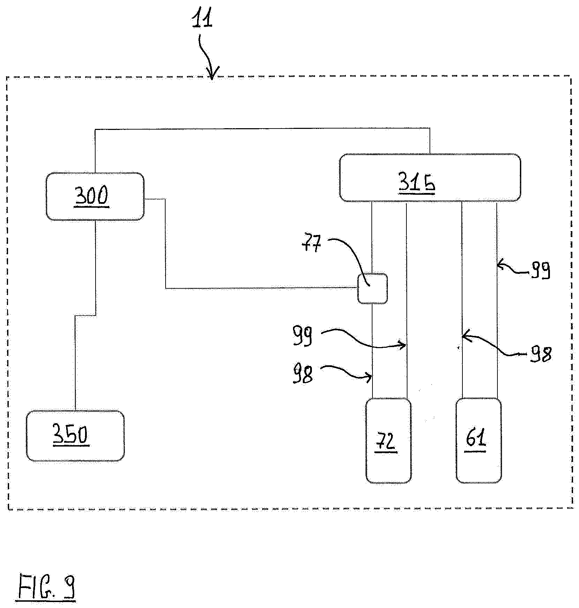

With reference to the diagram in Figure 9, the control means of unit 1 comprise a controller 300 and a hydraulic assembly 315 operatively connected to the hydraulic motors 61, 72 which actuate pump 71 and the rotation of the cartridge 211 of the first module 21, respectively. In this regard, filtering unit 1 comprises a feeding line 98 and a return line 99 of the oil for each hydraulic motor 61, 72. The hydraulic assembly 315 handles the oil flow through said lines 98, 99 and for this purpose comprises solenoid valves (not shown), the activation of which is adjusted by controller 300. In this regard, controller 300 sends the control signals to the hydraulic assembly 315, upon which the pump 71 and/or the hydraulic motor 61 of the first module 21 is activated/deactivated. Preferably, the hydraulic assembly 315 is configured to manage the operation of pump 71 with either fixed displacement or variable displacement.

According to a preferred embodiment, filtering unit 1 comprises signaling means 350 elastically connected to controller 300 to indicate the operative states and/or possible operating anomalies of the filtering modules 21, 22. The signaling means 350, e.g. warning lights, are preferably installed on the hollow body 11A of containment 11 so as to be visible from the ground, when mounted.

According to a preferred embodiment, the control means comprise pressure sensor means 77 associated with the hydraulic assembly 315 arranged within the containment 11. In particular, sensor means 77 detect the oil pressure along the feeding line 98 of the hydraulic motor 72 which actuates pump 71. Such a pressure is indicative of the water flow rate processed by the pump itself. In particular, a pressure line lower than a predetermined value indicates a substantially no-load operation of pump 71, and thus the absence of water in compartment 200. The presence/absence of water in compartment 200 is thus monitored by means of sensor means 77 which remain outside the compartment itself, as it is housed in containment 11.

The sensor means 77 are electrically connected to the controller 300 which intervenes on the hydraulic assembly 315 as a function of the received pressure signal. In particular, when the filtering unit 1 is activated, controller 300 sends a control signal to the hydraulic assembly, upon which the hydraulic motor 61 of the first module 21 and the hydraulic motor 72 of pump 71 are activated. When the pressure detected by the sensor means 77 is higher than a predetermined reference value, the two hydraulic motors 61, 72 are maintained in the activated state. Instead, when the pressure is the lower than the reference value, the control 300 sends another control signal to the hydraulic assembly 315 after which the two hydraulic motors 61 and 72 are deactivated. The signaling means 350 shown above are configured so as to indicate the operative states (activation and deactivation) at least of the first filtering module 21 and/or of the pump 71.

In this regard, the driving and diagnosing of controller 300 can be performed remotely or alternatively even by exploiting discreet connections with CAN BUS protocol. In the case of a tank truck, the electrical power supply of controller 300, and more in general of the electrical part, is preferably derived from the vehicle which supports the tank itself. In fixed applications, the power supply may be obtained by means of autonomous batteries.

According to another aspect, an ON-OFF valve is provided along the water collection line 80, preferably in the stretch crossing container 11. The purpose of such a valve is to allow the water to pass in the open (ON) position or to prevent it in the closed (OFF) position. Preferably, the ON-OFF valve is also controlled by means of a solenoid valve controlled by controller 300. The latter sends an activation or deactivation signal after which the valve is selectively opened or closed. In particular, according to a preferred embodiment, controller 300 sends an activation control of the ON-OFF valve after a predetermined period of time from the activation of the hydraulic motor 61 which activates the first module 21.

A preferred mode of the control unit according to the invention derives from the above, which comprises at least the steps of:
a) activating the hydraulic motor 61 of the first module 21;
b) activating the circulation pump 71;
c) detecting the feeding pressure of the oil sent to the hydraulic motor 72 of pump 71 of the circulation line 70 by means of the sensor means 77;
d) keeping the hydraulic motor 61 of the first module 21 and the hydraulic motor 72 of pump 71 activated if the pressure detected in step c) is higher than a predetermined value, or
e) opening the ON-OFF valve of the collection line 80 after a predetermined interval of time from the activation of the first filtering module 21.
f) deactivating the hydraulic motor 61 of the first module 21 and the hydraulic motor 72 of pump 71 if the pressure detected in step c) is lower than a predetermined value.

It has been seen that this control method allows obtaining optimal filtering conditions and ensuring a constant flow in the collection line 80 at the same time. In this regard, it has been seen that the rotary filter of the first module 21, in combination with the second module 22, comprises three cyclone separators to obtain a continuous variable filtering from 100 to 500 liters/minutes with filtering level from 30 to 50 microns.

It is worth nothing that filtering unit 1 may also be inserted into a tank 2 in which the sludge collection compartment has an adjustable extension. For this purpose, the manhole 114 will be arranged in an appropriate position or alternatively a plurality of the manholes will be present. In general, due to the configuration of filtering unit 1, the manufacturing and assembly cost for a piece of equipment 3 will be advantageously lower than the solutions known from the prior art.

Equipment 3 is preferably mounted on a mobile structure so as to form a tank truck, thus preferably, tank 2 is a tank of a tank truck.

Advantageously, the longer dimension of the widest cross section of the portion of filtering unit 1 developing from first side 10A of base 10 along developing direction 101 is shorter than the longer dimension of the cross section of the manhole 114. That is to say, the elements of the filtering unit 1 located underneath base 10 (in the opposite part of containment 11) have an overall encumbrance on a plane parallel to plane 100 (comprising base 10) that is smaller than the cross section of manhole 114. When the manhole 114 has a circular cross section, as depicted in the figures, the longer dimension of the widest cross section of the above said portion of filtering unit 1 is shorter than the diameter of the manhole 114. This achieves a filtering unit 1 easily insertable in manhole 114 and thus in compartment 200.

Filtering unit 1 and manhole 114 have complementary geometrical structures in order to allow an easy mutual coupling. In other words, if the manhole 114 is substantially cylindrical, also the overall shape of the filtering unit 1 is substantially cylindrical in order to allow the insertion of the filtering unit 1 in the manhole 114.

A process for collecting and treating the above sludge waste which can be carried out by means of equipment 3 comprises a first step of collecting the sludge waste in a compartment 200 of a tank 2. In a second step, the sludge waste is filtered in a first filtering module 21 inside said compartment 200. Then, at least one portion of said one stage filtered water is conveyed and further filtered in a second filtering module 22 inside said compartment 200. Finally, the two stages filtered water is conveyed outside compartment 200 and thus outside tank 2.

In this process the sludge waste is not driven outside compartment 200 before the first filtering step nor is the one stage filtered water driven outside compartment 200 before the second filtering step. As a matter of facts, the two filtering stages are performed inside compartment 200.

According to a further aspect, the present invention concerns a method of operation of an equipment 3 for collecting and treating sludge waste comprising a part of water. Said equipment 3 comprising a tank 2 and at least one filtering unit 1, said tank 2 defining a compartment 200 and a manhole 114, said filtering unit 1 comprising at least a first filtering module 21 and a second filtering module 22. The method comprising the steps of:
a. inserting said filtering unit 1 in said compartment 200 through said manhole 114;
b. activating means for collecting the sludge waste inside said compartment 200;
c. activating said first filtering module 21 and said second filtering module 22 of said filtering unit 1;
d. activating means for conveying two stages filtered water outside compartment 200.

These steps may be sequentially actuated in the above-mentioned chronology or in a different order. For example, step b may be actuated before or after step a. In particular, when the equipment 3 is mounted on a tank truck, step a is actuated before step b. When the equipment 3 is mounted on an immovable chassis, both orders may be used.
c. activating said first filtering module 21 and said second filtering module 22 of said filtering unit 1;
d. activating means for conveying two stages filtered water outside compartment 200.

These steps may be sequentially actuated in the above-mentioned chronology or in a different order. For example, step b may be actuated before or after step a. In particular, when the equipment 3 is mounted on a tank truck, step a is actuated before step b. When the equipment 3 is mounted on an immovable chassis, both orders may be used.

## Claims

1. Equipment (3) for collecting and treating sludge waste comprising a part of water, said equipment (3) comprising at least one tank (2) defining at least one compartment (200) for the collection of said waste, said tank (2) comprising at least one manhole (114) which defines a passageway for the insertion of filtering means in said compartment (200), **characterized in that** said filtering means comprise at least one filtering unit (1) for separating and filtering the water contained in the sludge waste, said filtering unit (1) being at least partially insertable within said compartment (200) through said manhole (114), wherein said filtering unit (1) comprises:
- a first filtering module (21) and a second filtering module (22) for filtering said water;
- a circulation line (70) between said filtering modules (21,22) and configured to transfer the water filtered by said first filtering module (21) to said second filtering module (22);
- a collection line (80, 80A) to collect and convey the water filtered by said second filtering module (22), outside compartment (200);
- a supporting frame (12) which supports said filtering modules (21, 22) and which is suitable to be partially or completely inserted in said compartment (200) through said manhole (114) of said tank (2); and
- connection means configured to form a connection between said frame (12) and said tank (2) so that said filtering modules (21, 22) are completely arranged within said compartment (200) upon such a connection,
wherein said connection means comprise a base (10) comprising a first side (10A) from which said supporting frame (12) develops, and wherein said filtering unit (1) further comprises a containment (11) which develops from a second side (10B) of said base (10) opposite to said first side (10A) of said base (10), and control means of said filtering unit (1) housed in said containment (11).

2. Equipment (3) according to claim 1, wherein said collection line (80) passes through said base (10) and ends with an end portion (80B) which is located in an area which is outside compartment (200), once said base (10) has been connected to said manhole (114) so that the water filtered by said second module (22) exits from said compartment (200) once said base (10) have been connected to said manhole (114).

3. Equipment (3) according to claim 1 or 2, wherein said frame (12) comprises means for adjusting the extension of the frame (12) itself along a reference direction.

4. Equipment (3) according to claim 3, wherein said base (10) develops on a single plane (100) and wherein said frame (12) develops mainly along a development direction (101) which is substantially orthogonal to said plane (100), said adjustment means allowing an adjustment of the extension of said frame (12) along a reference direction parallel to said development direction (101).

5. Equipment (3) according to claim 4, wherein said frame (12) comprises:
- at least two longitudinal elements (41, 42), connected to said first side (10A) of the base (10), which develop along said development direction (101);
- at least two transversal elements (43, 44) which prevalently develop along a transversal direction (102) which is substantially orthogonal to said development direction (101), wherein a first transversal element (43) is connected to the two longitudinal elements (41, 42) in a position close to the base (10), and wherein a second transversal element (43) is connected to the longitudinal elements (41, 42) in a position close to a terminal part of said longitudinal elements (41, 42) which is opposite to the base (10) itself.

6. Equipment (3) according to any one of the claims from 1 to 5, wherein said circulation line (70) comprises a circulation pump (71) the suction of which is connected to the outlet of said first module (21) and the delivery of which is connected to an inlet section of said second module (22), said pump (71) being actuated by means of a hydraulic motor (72).

7. Equipment (3) according to claim 6, wherein said circulation line (70) comprises a first stretch (73), which connects said first module (21) to the suction of said pump (71), and a second stretch (74A, 74B), which connects the delivery of said pump (71) to said second module (22), said second stretch (74A, 74B) being partially defined by an internally hollow part of a longitudinal element (41) of said frame (12).

8. Equipment (3) according to any one of the claims from 1 to 7, wherein said first filtering module (21) comprises a filtering cartridge (211) and rotation means for rotating said cartridge (211) about a predetermined rotation axis (150).

9. Equipment (3) according to any one of the claims from 1 to 8, wherein said second module (22) comprises at least one cyclone separator, which includes an inlet section (22A) communicating with said circulation line (70), a first outlet section (22B) communicating with said collection line (80, 80A) and a second outlet section (22C) communicating with said discharge line (81), said cyclone separator comprising a substantially cylindrical chamber (25) communicating with said inlet section (22A) and with said first outlet section (22B), and a conical portion (26), located underneath said cylindrical chamber (25) and defining said second outlet section (22C), wherein the inlet of said water into said cylindrical chamber (25) occurs according to a tangential direction.

10. Equipment (3) according to any one of claims from 1 to 9, comprising control means and wherein:
- said circulation line (70) comprises a circulation pump (71), the suction of which is connected to the outlet of said first filtering module (21) and the delivery of which is connected to an inlet section of said second filtering module (22), said pump (71) being actuated by means of a hydraulic motor (72);
- said control means comprising a controller (300) and a hydraulic assembly (315) operatively connected to said hydraulic motor (72) of said pump (71), said controller (300) being configured to send control signals to said hydraulic assembly (315) after which said hydraulic motor (72) of said pump (71) is activated/deactivated;
- said filtering unit (1) comprises sensor means (77), electrically connected to said controller (300) and configured to detect the oil pressure in a feeding line of said hydraulic motor (72), wherein said controller (300) is configured to control the deactivation of said hydraulic motor (72) when said oil pressure is lower than a predetermined reference value.

11. Equipment (3) according to claim 10, wherein said first filtering module (21) comprises a filtering cartridge (211) and a hydraulic motor (61) suitable to rotate said filtering cartridge (211) about a predetermined rotation axis (150), said hydraulic assembly (315) being operatively connected to said hydraulic motor (61) of said first filtering module (21), said controller (300) being configured to send control signals to said hydraulic assembly (315) upon which said hydraulic motor (61) of said first filtering module (21) is activated/deactivated.

12. Equipment (3) according to claim 11, further comprising an ON-OFF valve configured to allow/prevent the water to pass/from passing along said collection line (80, 80A), said ON-OFF valve being electrically connected to said controller (300) which is configured to activate said ON -OFF valve after a predetermined activation time of said hydraulic motor (61) of said first module (21).

13. Equipment (3) according to any one of the previous claims, wherein the longer dimension of the widest cross section of the portion of filtering unit (1) developing from said first side (10A) of said base (10) along a developing direction (101), is shorter than the longer dimension of the cross section of the manhole (114).

14. Method of operation of an equipment (3) for collecting and treating sludge waste comprising a part of water according to any of the claims 1-13, said method comprising the steps of:
a. inserting said filtering unit (1) in said compartment (200) through said manhole (114);
b. activating means for collecting the sludge waste inside said compartment (200);
c. activating said first filtering module (21) and said second filtering module (22) of said filtering unit (1);
d. activating means for conveying two stages filtered water outside said compartment (200).

## Patentansprüche

1. Ausrüstung (3) zum Sammeln und Aufbereiten von Schlammabfall, der einen Teil Wasser umfasst, wobei die Ausrüstung (3) mindestens einen Tank (2) umfasst, der mindestens ein Abteil (200) zum Sammeln des Abfalls definiert, wobei der Tank (2) mindestens ein Mannloch (114) umfasst, das einen Durchgang zum Einsetzen von Filtermitteln in das Abteil (200) definiert, **dadurch gekennzeichnet, dass** die Filtermittel mindestens eine Filtereinheit (1) zum Trennen und Filtern des Wassers, das in dem Schlammabfall enthalten ist, umfassen, wobei die Filtereinheit (1) mindestens teilweise durch das Mannloch (114) in das Abteil (200) einsetzbar ist, wobei die Filtereinheit (1) umfasst:
- ein erstes Filtermodul (21) und ein zweites Filtermodul (22) zum Filtern des Wassers;
- eine Zirkulationsleitung (70) zwischen den Filtermodulen (21, 22) und die dazu konfiguriert ist, das Wasser, das von dem ersten Filtermodul (21) gefiltert wird, zu dem zweiten Filtermodul (22) zu transferieren;
- eine Sammelleitung (80, 80A) zum Sammeln und Fördern des Wassers, das von dem zweiten Filtermodul (22) gefiltert wird, aus dem Abteil (200);
- einen Tragrahmen (12), der die Filtermodule (21, 22) trägt und der dazu geeignet ist, teilweise oder vollständig durch das Mannloch (114) des Tanks (2) in das Abteil (200) eingesetzt zu werden; und
- Verbindungsmittel, die dazu konfiguriert sind, eine Verbindung zwischen dem Rahmen (12) und dem Tank (2) derart zu bilden, dass die Filtermodule (21, 22) nach einer solchen Verbindung vollständig innerhalb des Abteils (200) eingerichtet sind,
wobei die Verbindungsmittel eine Basis (10) umfassen, die eine erste Seite (10A) umfasst, aus der sich der Tragrahmen (12) entwickelt, und wobei die Filtereinheit (1) weiter einen Einschluss (11) umfasst, der sich aus einer zweiten Seite (10B) der Basis (10), der ersten Seite (10A) der Basis (10) entgegengesetzt, entwickelt, und Steuermittel der Filtereinheit (1), die in dem Einschluss (11) untergebracht sind.

2. Ausrüstung (3) nach Anspruch 1, wobei die Sammelleitung (80) durch die Basis (10) durchgeht und mit einem Endabschnitt (80B) endet, der sich in einem Bereich befindet, der außerhalb des Abteils (200) liegt, sobald die Basis (10) mit dem Mannloch (114) derart verbunden wurde, dass das Wasser, das von dem zweiten Modul (22) gefiltert wird, aus dem Abteil (200) austritt, sobald die Basis (10) mit dem Mannloch (114) verbunden wurde.

3. Ausrüstung (3) nach Anspruch 1 oder 2, wobei der Rahmen (12) Mittel zum Einstellen der Erstreckung des Rahmens (12) selbst entlang einer Referenzrichtung umfasst.

4. Ausrüstung (3) nach Anspruch 3, wobei sich die Basis (10) auf einer einzigen Ebene (100) entwickelt und wobei sich der Rahmen (12) hauptsächlich entlang einer Entwicklungsrichtung (101) entwickelt, die im Wesentlichen orthogonal zu der Ebene (100) ist, wobei die Einstellmittel eine Einstellung der Erstreckung des Rahmens (12) entlang einer Referenzrichtung parallel zu der Entwicklungsrichtung (101) erlauben.

5. Ausrüstung (3) nach Anspruch 4, wobei der Rahmen (12) umfasst:
- mindestens zwei Längselemente (41, 42), die mit der ersten Seite (10A) der Basis (10) verbunden sind und sich entlang der Entwicklungsrichtung (101) entwickeln;
- mindestens zwei Querelemente (43, 44), die sich überwiegend entlang einer Querrichtung (102) entwickeln, die im Wesentlichen rechtwinklig zu der Entwicklungsrichtung (101) ist, wobei ein erstes Querelement (43) mit den beiden Längselementen (41, 42) in einer Position nahe der Basis (10) verbunden ist, und wobei ein zweites Querelement (43) mit den Längselementen (41, 42) in einer Position nahe einem Endteil der Längselemente (41, 42), das der Basis (10) selbst entgegengesetzt ist, verbunden ist.

6. Ausrüstung (3) nach einem der Ansprüche 1 bis 5, wobei die Zirkulationsleitung (70) eine Zirkulationspumpe (71) umfasst, deren Saugseite mit dem Auslass des ersten Moduls (21) verbunden ist und deren Druckseite mit einem Einlassabschnitt des zweiten Moduls (22) verbunden ist, wobei die Pumpe (71) mittels eines Hydraulikmotors (72) betätigt wird.

7. Ausrüstung (3) nach Anspruch 6, wobei die Zirkulationsleitung (70) eine erste Strecke (73), die das erste Modul (21) mit der Saugseite der Pumpe (71) verbindet, und eine zweite Strecke (74A, 74B) umfasst, die die Druckseite der Pumpe (71) mit dem zweiten Modul (22) verbindet, wobei die zweite Strecke (74A, 74B) teilweise durch einen innen hohlen Teil eines Längselements (41) des Rahmens (12) definiert ist.

8. Ausrüstung (3) nach einem der Ansprüche 1 bis 7, wobei das erste Filtermodul (21) eine Filterpatrone (211) und Drehmittel zum Drehen der Patrone (211) um eine vorbestimmte Drehachse (150) umfasst.

9. Ausrüstung (3) nach einem der Ansprüche 1 bis 8, wobei das zweite Modul (22) mindestens einen Zyklonabscheider umfasst, der einen Einlassabschnitt (22A), der mit der Zirkulationsleitung (70) in Kommunikation steht, einen ersten Auslassteilabschnitt (22B), der mit der Sammelleitung (80, 80A) in Kommunikation steht, und einen zweiten Auslassteilabschnitt (22C), der mit der Abflussleitung (81) in Kommunikation steht, beinhaltet, wobei der Zyklonabscheider eine im Wesentlichen zylindrische Kammer (25), die mit dem Einlassabschnitt (22A) und mit dem ersten Auslassteilabschnitt (22B) in Kommunikation steht, und einen konischen Abschnitt (26) umfasst, der sich unterhalb der zylindrischen Kammer (25) befindet und den zweiten Auslassteilabschnitt (22C) definiert, wobei der Einlass des Wassers in die zylindrische Kammer (25) in tangenzialer Richtung auftritt.

10. Ausrüstung (3) nach einem der Ansprüche 1 bis 9, die Steuermittel umfasst und wobei:
- die Zirkulationsleitung (70) eine Zirkulationspumpe (71) umfasst, deren Saugseite mit dem Auslass des ersten Filtermoduls (21) verbunden ist, und deren Druckseite mit einem Einlassabschnitt des zweiten Filtermoduls (22) verbunden ist, wobei die Pumpe (71) mittels eines Hydraulikmotors (72) betätigt wird;
- die Steuermittel eine Steuereinheit (300) und eine Hydraulikbaugruppe (315) umfassen, die betriebswirksam mit dem Hydraulikmotor (72) der Pumpe (71) verbunden ist, wobei die Steuereinheit (300) dazu konfiguriert ist, Steuersignale an die Hydraulikbaugruppe (315) zu senden, wonach der Hydraulikmotor (72) der Pumpe (71) aktiviert/deaktiviert wird;
- die Filtereinheit (1) Sensormittel (77) umfasst, die elektrisch mit der Steuereinheit (300) verbunden und dazu konfiguriert sind, den Öldruck in einer Zuleitung des Hydraulikmotors (72) zu erfassen, wobei die Steuereinheit (300) dazu konfiguriert ist, die Deaktivierung des Hydraulikmotors (72) zu steuern, wenn der Öldruck niedriger als ein vorbestimmter Referenzwert ist.

11. Ausrüstung (3) nach Anspruch 10, wobei das erste Filtermodul (21) eine Filterpatrone (211) und einen Hydraulikmotor (61) umfasst, der dazu geeignet ist, die Filterpatrone (211) um eine vorbestimmte Drehachse (150) zu drehen, wobei die Hydraulikbaugruppe (315) betriebswirksam mit dem Hydraulikmotor (61) des ersten Filtermoduls (21) verbunden ist, wobei die Steuereinheit (300) dazu konfiguriert ist, Steuersignale an die Hydraulikbaugruppe (315) zu senden, woraufhin der Hydraulikmotor (61) des ersten Filtermoduls (21) aktiviert/deaktiviert wird.

12. Ausrüstung (3) nach Anspruch 11, die weiter ein EIN-AUS-Ventil umfasst, das dazu konfiguriert ist zu ermöglichen/zu verhindern, dass das Wasser entlang der Sammelleitung (80, 80A) durchgeht, wobei das EIN-AUS-Ventil elektrisch mit der Steuereinheit (300) verbunden ist, die dazu konfiguriert ist, das EIN-AUS-Ventil nach einer vorbestimmten Aktivierungszeit des Hydraulikmotors (61) des ersten Moduls (21) zu aktivieren.

13. Ausrüstung (3) nach einem der vorstehenden Ansprüche, wobei die längere Abmessung des breitesten Querschnitts des Abschnitts der Filtereinheit (1), der sich von der ersten Seite (10A) der Basis (10) entlang einer Entwicklungsrichtung (101) entwickelt, kürzer ist als die längere Abmessung des Querschnitts des Mannlochs (114).

14. Verfahren zum Betrieb einer Ausrüstung (3) zum Sammeln und Aufbereiten von Schlammabfall, der einen Teil Wasser umfasst, nach einem der Ansprüche 1-13, wobei das Verfahren die folgenden Schritte umfasst:
a. Einsetzen der Filtereinheit (1) in das Abteil (200) durch das Mannloch (114);
b. Aktivieren von Mitteln zum Sammeln des Schlammabfalls innerhalb des Abteils (200);
c. Aktivieren des ersten Filtermoduls (21) und des zweiten Filtermoduls (22) der Filtereinheit (1);
d. Aktivieren von Mitteln zum Fördern von zweistufig gefiltertem Wasser aus dem Abteil (200) heraus.

## Revendications

1. Équipement (3) pour collecter et traiter des déchets boueux comprenant une partie d'eau, ledit équipement (3) comprenant au moins une cuve (2) définissant au moins un compartiment (200) pour la collecte desdits déchets, ladite cuve (2) comprenant au moins un trou d'homme (114) qui définit un passage pour l'insertion de moyens filtrants dans ledit compartiment (200), **caractérisé en ce que** lesdits moyens filtrants comprennent au moins une unité de filtration (1) pour séparer et filtrer l'eau contenue dans les déchets boueux, ladite unité de filtration (1) pouvant être insérée au moins partiellement à l'intérieur dudit compartiment (200) par ledit trou d'homme (114), dans lequel ladite unité de filtration (1) comprend :
- un premier module de filtrage (21) et un second module de filtrage (22) pour filtrer ladite eau ;
- une conduite de circulation (70) entre lesdits modules de filtrage (21, 22) et configurée pour transférer l'eau filtrée par ledit premier module de filtrage (21) vers ledit second module de filtrage (22) ;
- une conduite de collecte (80, 80A) pour collecter et acheminer l'eau filtrée par ledit second module de filtrage (22), à l'extérieur du compartiment (200) ;
- un cadre de support (12) qui supporte lesdits modules de filtrage (21, 22) et qui est approprié pour être inséré partiellement ou complètement dans ledit compartiment (200) par ledit trou d'homme (114) de ladite cuve (2) ; et
- des moyens de raccordement configurés pour former un raccordement entre ledit cadre (12) et ladite cuve (2) de telle sorte que lesdits modules de filtrage (21, 22) sont agencés complètement à l'intérieur dudit compartiment (200) lors d'un tel raccordement,
dans lequel lesdits moyens de raccordement comprennent une base (10) comprenant un premier côté (10A) à partir duquel ledit cadre de support (12) se développe, et dans lequel ladite unité de filtrage (1) comprend en outre un contenant (11) qui se développe à partir d'un second côté (10B) de ladite base (10) opposé audit premier côté (10A) de ladite base (10) et des moyens de commande de ladite unité de filtrage (1) logés dans ledit contenant (11).

2. Équipement (3) selon la revendication 1, dans lequel ladite conduite de collecte (80) traverse ladite base (10) et se termine par une partie d'extrémité (80B) qui est située dans une zone qui est à l'extérieur du compartiment (200), une fois que ladite base (10) a été raccordée audit trou d'homme (114), de telle sorte que l'eau filtrée par ledit second module (22) sort dudit compartiment (200) une fois que ladite base (10) a été raccordée audit trou d'homme (114).

3. Équipement (3) selon la revendication 1 ou 2, dans lequel ledit cadre (12) comprend des moyens pour ajuster l'extension du cadre (12) même selon une direction de référence.

4. Équipement (3) selon la revendication 3, dans lequel ladite base (10) se développe sur un plan unique (100) et dans lequel ledit cadre (12) se développe principalement selon une direction de développement (101) qui est sensiblement orthogonale audit plan (100), lesdits moyens d'ajustement permettant un ajustement de l'extension dudit cadre (12) le long d'une direction de référence parallèle à ladite direction de développement (101).

5. Équipement(3) selon la revendication 4, dans lequel ledit cadre (12) comprend :
- au moins deux éléments longitudinaux (41, 42) raccordés audit premier côté (10A) de la base (10), qui se développent le long de ladite direction de développement (101) ;
- au moins deux éléments transversaux (43, 44) qui se développent principalement le long d'une direction transversale (102) qui est sensiblement orthogonale à ladite direction de développement (101), dans lequel un premier élément transversal (43) est raccordé aux deux éléments longitudinaux (41, 42) dans une position proche de la base (10) et dans lequel un second élément transversal (43) est raccordé aux éléments longitudinaux (41, 42) dans une position proche d'une partie terminale desdits éléments longitudinaux (41, 42) qui est opposée à la base (10) même.

6. Équipement (3) selon l'une quelconque des revendications 1 à 5, dans lequel ladite conduite de circulation (70) comprend une pompe de circulation (71) dont l'aspiration est raccordée à la sortie dudit premier module (21) et dont la distribution est raccordée à une section d'entrée dudit second module (22), ladite pompe (71) étant actionnée au moyen d'un moteur hydraulique (72).

7. Équipement (3) selon la revendication 6, dans lequel ladite conduite de circulation (70) comprend un premier tronçon (73) qui relie ledit premier module (21) à l'aspiration de ladite pompe (71) et un second tronçon (74A, 74B) qui relie la distribution de ladite pompe (71) audit second module (22), ledit second tronçon (74A, 74B) étant partiellement défini par une partie intérieurement creuse d'un élément longitudinal (41) dudit cadre (12).

8. Équipement (3) selon l'une quelconque des revendications 1 à 7, dans lequel ledit premier module de filtrage (21) comprend une cartouche filtrante (211) et des moyens de rotation pour faire tourner ladite cartouche (211) autour d'un axe de rotation prédéterminé (150).

9. Équipement (3) selon l'une quelconque des revendications 1 à 8, dans lequel ledit second module (22) comprend au moins un séparateur à cyclone qui inclut une section d'entrée (22A) communiquant avec ladite conduite de circulation (70), une première section de sortie (22B) communiquant avec ladite conduite de collecte (80, 80A) et une seconde section de sortie (22C) communiquant avec ladite conduite de décharge (81), ledit séparateur à cyclone comprenant une chambre sensiblement cylindrique (25) communiquant avec ladite section d'entrée (22A) et avec ladite première section de sortie (22B) et une partie conique (26), située sous ladite chambre cylindrique (25) et définissant ladite seconde section de sortie (22C), dans lequel l'entrée de ladite eau dans ladite chambre cylindrique (25) se produit selon une direction tangentielle.

10. Équipement (3) selon l'une quelconque des revendications 1 à 9, comprenant des moyens de commande et dans lequel :
- ladite conduite de circulation (70) comprend une pompe de circulation (71) dont l'aspiration est raccordée à la sortie dudit premier module de filtrage (21) et dont la distribution est raccordée à une section d'entrée dudit second module de filtrage (22), ladite pompe (71) étant actionnée au moyen d'un moteur hydraulique (72) ;
- lesdits moyens de commande comprenant un dispositif de commande (300) et un ensemble hydraulique (315) raccordé de manière fonctionnelle audit moteur hydraulique (72) de ladite pompe (71), ledit dispositif de commande (300) étant configuré pour envoyer des signaux de commande audit ensemble hydraulique (315) après quoi ledit moteur hydraulique (72) de ladite pompe (71) est activé/désactivé ;
- ladite unité de filtrage (1) comprend des moyens de capteur (77) raccordés électriquement audit dispositif de commande (300) et configurés pour détecter la pression d'huile dans une conduite d'alimentation dudit moteur hydraulique (72), dans lequel ledit dispositif de commande (300) est configuré pour commander la désactivation dudit moteur hydraulique (72) lorsque ladite pression d'huile est inférieure à une valeur de référence prédéterminée.

11. Équipement (3) selon la revendication 10, dans lequel ledit premier module de filtrage (21) comprend une cartouche filtrante (211) et un moteur hydraulique (61) approprié pour faire tourner ladite cartouche filtrante (211) autour d'un axe de rotation prédéterminé (150), ledit ensemble hydraulique (315) étant raccordé de manière fonctionnelle audit moteur hydraulique (61) dudit premier module de filtrage (21), ledit dispositif de commande (300) étant configuré pour envoyer des signaux de commande audit ensemble hydraulique (315), après quoi ledit moteur hydraulique (61) dudit premier module de filtrage (21) est activé/désactivé.

12. Équipement (3) selon la revendication 11, comprenant en outre une vanne MARCHE-ARRÊT configurée pour permettre/empêcher l'eau de passer le long de ladite conduite de collecte (80, 80A), ladite vanne MARCHE-ARRÊT étant raccordée électriquement audit dispositif de commande (300) qui est configuré pour activer ladite vanne MARCHE-ARRÊT après un temps d'activation prédéterminé dudit moteur hydraulique (61) dudit premier module (21).

13. Équipement (3) selon l'une quelconque des revendications précédentes, dans lequel la dimension plus longue de la section transversale la plus large de la partie de l'unité de filtrage (1) se développant à partir dudit premier côté (10A) de ladite base (10) le long d'une direction de développement (101) est plus courte que la dimension plus longue de la section transversale du trou d'homme (114).

14. Procédé de fonctionnement d'un équipement (3) pour collecter et traiter des déchets boueux comprenant une partie d'eau selon l'une quelconque des revendications 1-13, ledit procédé comprenant les étapes consistant à :
a. insérer ladite unité de filtrage (1) dans ledit compartiment (200) par ledit trou d'homme (114) ;
b. activer des moyens pour collecter les déchets boueux à l'intérieur dudit compartiment (200) ;
c. activer ledit premier module de filtrage (21) et ledit second module de filtrage (22) de ladite unité de filtrage (1) ;
d. activer des moyens pour acheminer l'eau filtrée en deux étapes à l'extérieur dudit compartiment (200).
